# FASCICULE DE BREVET EUROPEEN

(11) **EP 3 458 344 B1**
(45) Date de publication et mention de la délivrance du brevet: **25.11.2020**
(21) Numéro de dépôt: 17719863.7
(22) Date de dépôt: 06.04.2017
(51) Int. Cl.: B62H 3/06, B62H 3/08

(54) **SUPPORT DESTINE A RANGER UN ENGIN ROULANT**
GESTELL ZUR LAGERUNG EINES RADFAHRZEUGS
RACK FOR STORING A WHEELED VEHICLE

(30) Priorité: 18.05.2016 FR 1654410
(43) Date de publication de la demande: 27.03.2019
(73) Titulaire: PSA Automobiles SA, 78300 Poissy (FR)
(72) Inventeur: LE FLOCH, Frédéric, 78000 VERSAILLES (FR)
(74) Mandataire: Ménès, Catherine
(86) Numéro de dépôt international: PCT/FR2017/050823
(87) Numéro de publication internationale: WO 2017/198918

(56) Documents cités:
- CN-U- 203 332 269
- GB-A- 2 245 238
- JP-A- 2011 235 698
- US-A- 3 785 517

## Description

La présente invention revendique la priorité de la demande française 1654410 déposée le 18 mai 2016.

L'invention porte sur un support destiné à ranger un engin roulant de façon stable par rapport au sol ou à un plancher, un engin roulant avec au moins une roue tel qu'un cycle, une trottinette, un gyropode,.... Le support est posé et fixé à chaque utilisation de façon amovible et rapide par rapport au sol ou au plancher et enlevé de façon tout aussi rapide. Le support peut également être doté d'un dispositif de recharge électrique d'un engin roulant à assistance électrique à brancher à une prise reliée à un réseau électrique.

Il est connu de par le document FR2829097 d'avoir un véhicule automobile qui transporte dans le coffre une moto dont les roues reposent sur un porte moto occupant tout le plancher du coffre. La moto est stabilisée en position verticale par rapport au coffre car ses roues viennent se caler dans une empreinte du porte moto. L'assise de la moto sert à fixer la moto au siège du rang arrière et à adosser un passager assis sur un siège du rang arrière du véhicule automobile.

Cependant, le support de l'engin roulant : porte moto est généralement fixé une fois pour toutes. Il est à demeure dans le coffre et il occupe l'ensemble du plancher du coffre. Aussi il n'y a pas le choix de l'orientation de l'engin roulant dans le coffre, ce qui réduit le volume de chargement utile du coffre. Ceci peut poser des problèmes pour introduire des affaires dans le coffre, ranger ces affaires et pour optimiser le rangement général des affaires dans le coffre. La position de rangement à la verticale est aussi sujette au phénomène de roulis ce qui réduit la stabilité de l'engin et du véhicule lorsque le véhicule se déplace. Le blocage de la position de rangement est mal aisé.

Par ailleurs, si les roues de l'engin roulant sont en contact direct avec le plancher du coffre ou le sol et si elles sont sales ou humides, cela laisse des traces sur le plancher ou le sol. C'est un risque de désagrément du propriétaire de l'automobile qui voit son plancher de coffre ou le sol dégradé.

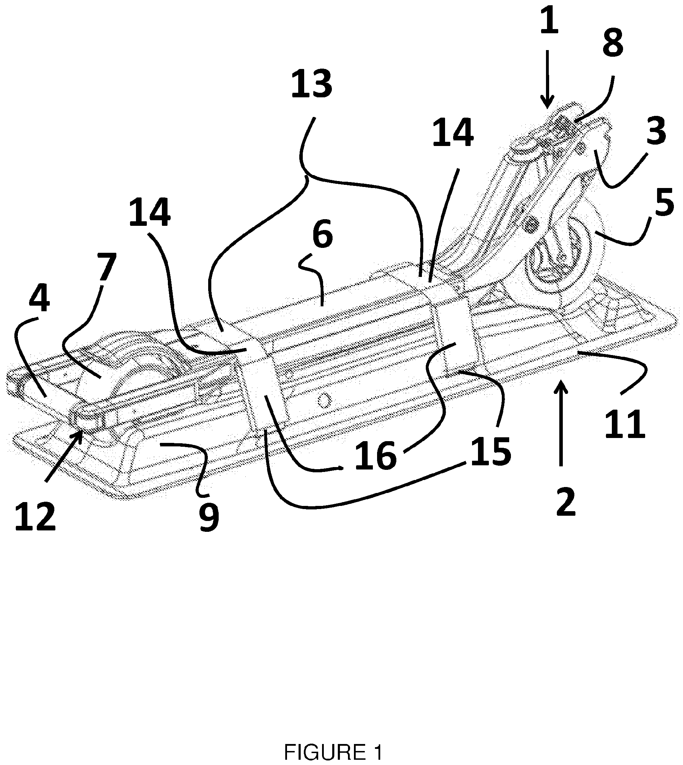

Il est également connu des dispositifs tels que ceux du document JP S52 21669 et GB2245238. Le document JP S52 21669 présente un dispositif en deux parties chacune avec une empreinte recevant une partie d'une roue d'un engin. Chacune des parties est posée sur un sol. La figure 1 montre une imbrication entre les éléments 9 et 11, mais cela est insuffisant pour en déduire leur rôle dans la participation à la fixation de la partie au sol si elle existe, ni les caractéristiques techniques de cette dernière.

Le document GB2245238 présente un dispositif anti-vol de vélo arrimé par boulonnage au sol. Ce dispositif n'est pas amovible sans outil. Le dispositif devant supporter le poids du vélo stocké en position verticale, est donc lourd, massif ce qui le rend difficile à manipuler, à transporter à chaque utilisation. Document US3785517 montre le préambule de la revendication 1.

Selon l'invention, on résout ces problèmes en proposant un support de rangement d'engin roulant de façon stable sur le plancher d'un coffre de véhicule, à dimensions réduites permettant d'adapter le rangement de l'engin roulant au regard de l'usage général du coffre, avec des moyens de fixation sans outil et à chaque utilisation de façon amovible et rapide entre le support et le plancher du coffre ou le sol.

Dans le cas où les interfaces des moyens de fixation sur le sol ou le plancher du coffre sont multiples, il est possible de changer l'orientation du rangement au gré de l'utilisateur.

Le support aura une taille réduite pour ne pas être encombrant sur la surface où il est posé, que ce soit sur le sol ou sur un plancher.

Pour faciliter la manipulation, l'utilisateur peut faire rouler l'engin sur une rampe de roulement reportant le poids de l'engin sur le support, l'usager n'a plus qu'à pousser, tirer, orienter l'engin pour le ranger sur le support ou le sortir du support. Pour faciliter l'introduction de l'engin roulant, il est envisagé d'avoir un support présentant une rampe de roulement d'une roue de l'engin roulant avec un point d'entrée permettant à la roue d'être roulée sans obstacle depuis le plancher ou le sol sur la face supérieure du support. L'engin roulant est facile à introduire sur le support. Cet accès par le point d'entrée peut également servir à sortir l'engin du support.

Le support ayant une taille suffisante pour recevoir l'engin, l'engin n'est plus au contact du plancher et du sol, les risques de rayures, de salissures, de traces d'humidité du sol ou plancher sont réduits au maximum.

Dans le cas d'un engin roulant à assistance électrique, le support présentera un dispositif 17 de charge de la batterie majoritairement implanté sous la face inférieure du support (celle en vis-à-vis du sol ou du plancher) avec un passage prévu pour le câble d'alimentation et être ainsi à l'abri de l'écrasement par l'engin roulant.

Plus précisément, l'invention porte donc sur un support destiné à ranger un engin roulant dans le coffre d'un véhicule automobile, ledit support présentant une face supérieure ayant des dimensions adaptées pour recevoir l'engin roulant en position de rangement, une roue de l'engin étant alors disposée dans une empreinte du support, support qui comporte des moyens d'attaches rapides au coffre ne nécessitant pas l'utilisation d'un outil pour solidariser ou désolidariser ledit support à un point
d'ancrage. Le support peut être donc facilement installé / désinstallé sur le sol ou monté/démonté dans le coffre au gré des besoins de l'usager uniquement avec des opérations manuelles (sans outil) et dans un temps de montage / démontage rendant l'opération brève au regard de l'usage réel, tout en assurant une immobilité du support par rapport au sol ou plancher, une fois le support fixé, attaché. Les moyens d'attaches rapides ne nécessitent pas d'outil et sont simples à manipuler à chaque utilisation pour ne pas donner un caractère rébarbatif à l'utilisation.

L'invention porte sur un support dont lesdits lesdits moyens d'attaches rapides sont présents sur la face inférieure du support. Les moyens d'attaches rapides ne sont pas visibles lorsque le support est posé au sol ou au plancher, ils ne sont pas encombrants par rapport au support en soi.

L'invention porte sur un support dont lesdits moyens d'attaches rapides comprennent un matériau auto-grippant, ledit point d'ancrage étant constitué par le matériau de surface du sol ou du plancher. Les moyens d'attaches rapides sont donc repositionnables, ajustables facilement et rapidement et ne nécessitent pas d'outil pour les manipuler.

De préférence, l'invention porte sur un support qui est réalisé en matière plastique thermoformée. Le support est réalisé dans une matière facile d'entretien. Et aussi le support a une épaisseur faible ce qui réduit son poids, le support est léger, et plus facile à porter par l'usager lors de son positionnement, son changement de lieu entre un lieu de stockage et un lieu où il va servir à recevoir un engin roulant. Quand le support est posé sur le plancher d'un coffre ou une étagère, son poids est plus facilement supportable au regard de la charge maximum définie pour un plancher de coffre de véhicule ou le plancher d'un appartement ou la planche d'une étagère de garage...

De préférence, l'invention porte sur un support qui comporte des moyens de maintien pour lier de façon amovible et rapide ledit engin et ledit support. L'engin est maintenu lié au support. L'engin ne risque plus de sortir de sa position de rangement par mégarde (bousculade) ou par effet dynamique lorsque le véhicule qui l'héberge dans son coffre est en mouvement. Les opérations de rangement et dérangement de l'engin peuvent devenir fréquentes car les moyens de maintien sont amovibles, manipulés avec rapidité.

De préférence, l'invention porte sur un support dont ladite face supérieure comporte au moins une rampe de roulement avec un point d'entrée pour l'engin à une hauteur nulle ou faible par rapport audit sol ou plancher. L'usager n'a pas d'effort à fournir pour faire passer l'éventuelle marche entre le sol ou plancher et la rampe de roulement. La roue ne rencontre quasiment pas d'obstacle quand elle passe du sol ou plancher, à la rampe de roulement. L'engin est roulé du sol ou plancher à la rampe de roulement sans difficulté, puis dans la rampe jusqu'à être rangé. Le poids de l'engin est porté par la rampe de roulement et non l'usager facilitant les manipulations.

De préférence, l'invention porte sur un support dont ladite rampe présente un coude. Cela permet d'avoir un support avec une position de rangement de l'engin roulant selon une certaine ligne directrice distincte par rapport à l'orientation de la ligne directrice de la position de roulement au point d'entrée qui conserve tout au long de la rampe de roulement le portage du poids de l'engin par la roue en appui avec la rampe. La facilité procurée par le roulement lors des manipulations de l'engin par l'usager est ainsi conservée même si la position de rangement n'est pas coplanaire avec certaines positions lors du roulement.

De préférence, l'invention porte sur un support dont ladite face supérieure présente un appui pour faire passer l'engin réciproquement d'une position verticale de roulement à une position de rangement. Le poids de l'engin est transféré depuis la roue en contact avec la rampe de roulement vers le flanc de l'engin en contact avec l'appui de la face supérieure, l'usager penche l'engin plutôt qu'il ne le porte dans une position oblique jusqu'à ce que l'engin repose dans l'empreinte. L'engin est guidé lors du changement d'obliquité par l'appui, cela facilite son positionnement en vis-à-vis de l'empreinte. L'usager a un effort réduit à fournir.

De préférence, l'invention porte sur un support dont l'engin roulant est une trottinette, un monocycle, gyropode ou un vélo. L'engin dispose d'une ou plusieurs roues pour les déplacements de l'usager, dont une peut servir à rouler sur la rampe jusqu'à une position proche de la position de rangement. L'engin peut être transporté dans le coffre d'un véhicule sans risque de rouler dans le coffre lorsque le véhicule est en mouvement ou bien l'engin peut être rangé sur le support au sol ou plancher en réduisant les risques d'être déstabilisé par bousculade par exemple. Le support peut prévoir une empreinte avec des réceptacles pour chacune des roues ou pour une majorité des éléments de l'engin selon la stabilité maximale recherchée.

De préférence, l'invention porte sur un support qui comprend un chargeur relié à une interface de connexion audit engin, et à une interface de couplage à un réseau électrique. Le chargeur n'est pas à transporter par l'engin quand celui-ci sert à déplacer un usager, ni dans le coffre du véhicule quand celui-ci n'héberge pas le support ou l'engin. Le chargeur n'alourdit pas l'engin. Etant solidaire du support, il n'est pas égaré. Le support ainsi équipé est compatible avec un usage couplé au réseau électrique domestique ou d'un véhicule.

De préférence, l'invention porte sur un support dont ledit chargeur et au moins une desdites interfaces sont implantés du côté de ladite face inférieure. Cette implantation permet de limiter les atteintes à l'intégrité du chargeur et des interfaces, des câbles lorsqu'il s'agit de ranger l'engin dans le support et même de stocker le support. Ils sont à l'abri sous la face inférieure du support, des risques d'écrasement, de traces de salissures, d'humidités...

L'invention est décrite plus en détail ci-après et en référence aux figures représentant schématiquement l'invention dans des modes de réalisation préférentiels.
La figure 1 présente une vue d'une trottinette rangée debout dans le support selon un premier mode de réalisation de l'invention.
Les figures 2a, 2b et 2c présentent une vue de la face inférieure du support, équipée du dispositif de recharge selon un mode de réalisation de l'invention.
La figure 3 présente une vue d'une trottinette rangée couchée sur un de ses flancs dans le support fixé longitudinalement dans un coffre selon un premier mode d'orientation de l'invention.
La figure 4 présente une vue d'une trottinette rangée debout dans le support fixé transversalement dans un coffre selon le second mode d'orientation de l'invention.
La figure 5 présente une vue d'un vélo rangé couché sur un de ses flancs sur un support fixé sur le plancher du coffre et orienté longitudinalement par rapport au véhicule.
La figure 6 présente une vue du dessus du support de vélo.
La figure 7 présente une vue du dessous du support de vélo.
La figure 8 présente un support de trottinette avec des moyens d'attaches rapides par arrimage avec une bande porteuse d'attaches recourbées.
La figure 9 présente un coffre avec des anneaux d'arrimage pour arrimer le support.

La figure 1 présente un engin roulant 1 qui est une trottinette compactée et rangée sur le support 2.

La trottinette 1 est constituée d'une potence 3 avec un guidon 4 repliable, porteuse de la roue avant 5 totalement orientable, potence 3 reliée à une planche 6 avec une roue arrière 7, par un dispositif de repli 8 de la potence 3 parallèlement à la planche 6. La trottinette 1 en position compactée avec la potence 3 parallèle à la planche 6, se présente sous une forme allongée avec la roue avant 5 qui est dans le même plan que la roue arrière 7. La trottinette est rangée « debout » c'est-à-dire avec les roues 5 et 7 dans un plan vertical par rapport au support 2.

Le support 2 présente une face supérieure 9 visible sur la figure 1 et une face inférieure 10, cachée sur la figure 1, opposée à la face supérieure 9 et orientée vers le sol. Le support 2 est limité par une base 11 rectangulaire globalement plane et en contact avec le sol ou le planche. La trottinette 1 rangée sur le support 2 comporte une surface dite «surface inférieure 12 » c'est-à-dire orientée vers le sol, qui se projette sur le sol selon une certaine aire. La base 11 du support 2 s'inscrit dans un rectangle dont la longueur et la largeur sont approximativement égales à celles de la surface inférieure 12 de la trottinette 1 de la figure 1. La base 11 rectangulaire a une longueur et une largeur suffisantes pour contenir un maximum de l'aire de la surface inférieure 12 la trottinette 1, pour que la trottinette 1 compactée soit rangée sans que la trottinette 1 ne dépasse de trop de l'aplomb des côtés de la base 11 rectangulaire du support 2. Ceci permet de limiter les dégradations potentielles de la trottinette sur le sol.

La trottinette 1 rangée est maintenue liée au support 2 par des moyens 13 de maintien tel qu'une paire de sangles 14 parallèles. Chaque sangle 14 traverse deux ouvertures 15 présentes entre les faces supérieure 9 et inférieure 10 du support 2 de part et d'autres de la trottinette 1 rangée et passent par-dessus la trottinette 1.

Les sangles 14 disposent de système 16 d'accrochage auto-grippant. Le système 16 d'accrochage comporte des crochets sur un premier élément et des bouclettes sur un second élément, les bouclettes coopèrent avec les crochets pour réaliser la fermeture de la sangle 14 par accrochage des deux éléments entre eux. Les premier et second éléments sont fixés de part et d'autre de la sangle 14 de façon à ce que le second élément placé à une des extrémités de la sangle 14 s'accroche au premier élément une fois que l'extrémité de la sangle 14 soit sortie de l'ouverture 15 depuis la face inférieure 10. La sangle forme alors une boucle enserrant partiellement le support 2 et la trottinette 1 au niveau de la potence 3 repliée sur la planche 6. Pour enlever la sangle 14, il suffit de tirer les deux éléments dans un sens opposé.

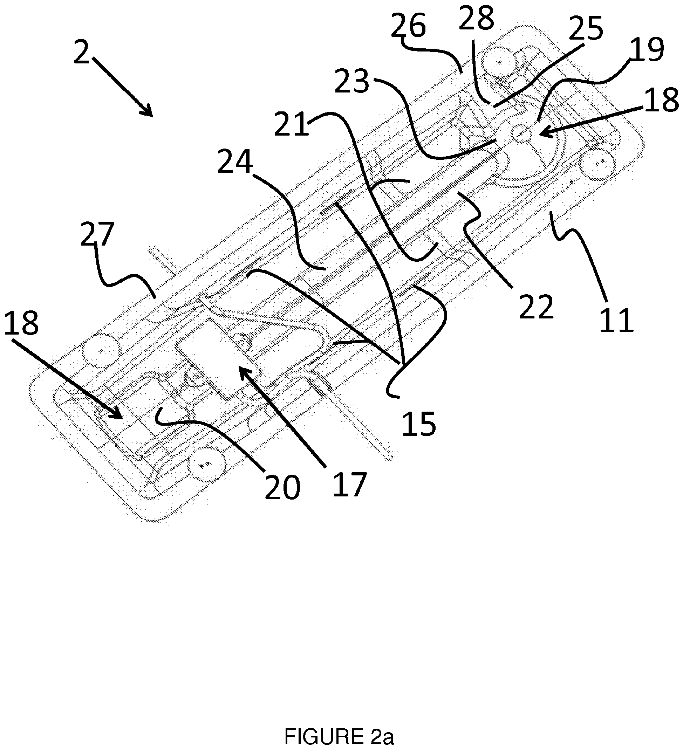

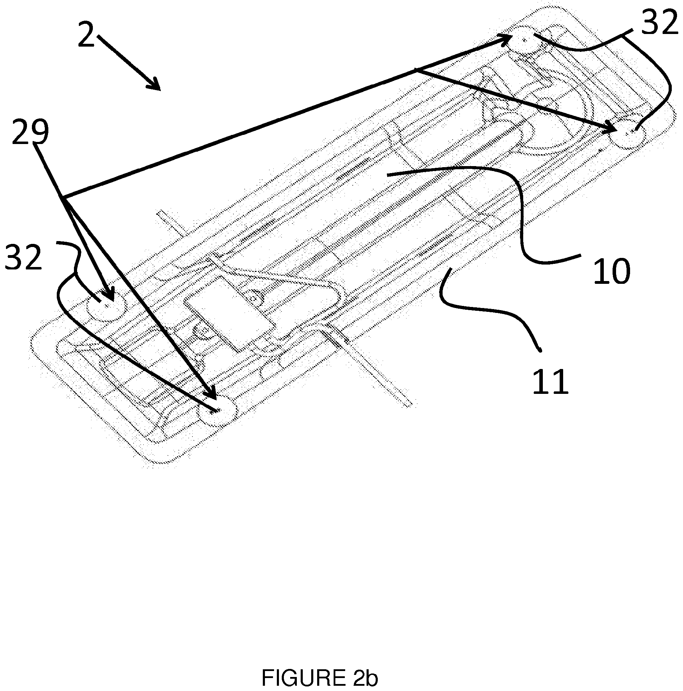

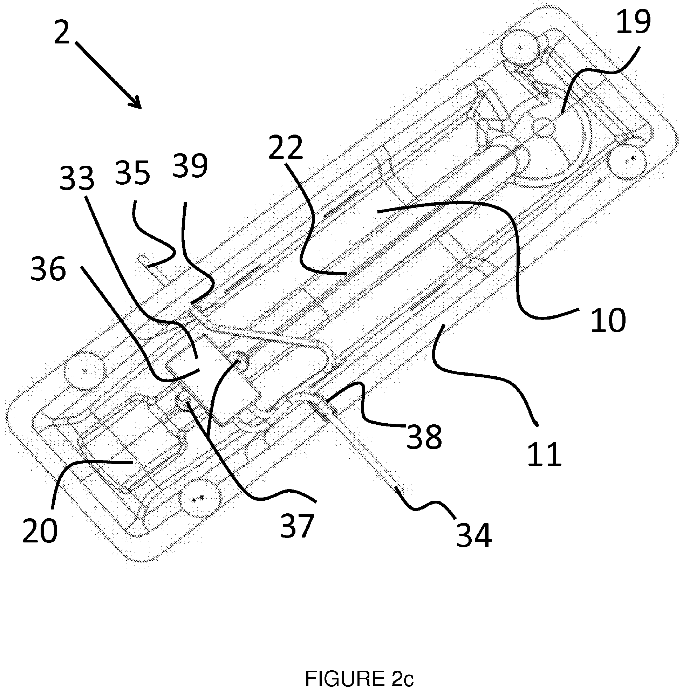

Les figures 2a, 2b et 2c présentent la vue de dessous du support 2 équipé d'un dispositif 17 de charge électrique de l'engin roulant 1 qui est la trottinette 1 avec une assistance électrique. Le support 2 étant réalisé en plastique thermoformé, il a une épaisseur constante entre les faces inférieure 10 et supérieure 9. Le support 2 présente sur sa face inférieure 10 des bosses et creux qui se reflètent sur la face supérieure 9 comme des creux et des bosses. Ceci permet de compléter la description de la face supérieure 9 faite pour la figure 1. Certains creux de la face 9 forment une empreinte 18.

Sur la figure 2a, la trottinette 1 sera rangée dans le support 2 lorsque qu'elle est calée dans l'empreinte 18 et que sa position est stable par rapport au sol. La trottinette 1 de la figure 1 est rangée avec une position de rangement dite debout où le plan contenant les roues 5 et 7 est orthogonal par rapport au plan contenant la base 11 rectangulaire, donc vertical par rapport au sol ou plancher. La position de rangement debout est stable du fait que les roues 5 et 7 de la trottinette 1 sont retenues dans deux réceptacles 19 et 20 creusés à une certaine altitude par rapport à la base 11 rectangulaire, en comparaison à l'altitude de certaines bosses et creux de la face supérieure 9. La planche 6 et la potence 3 peuvent être déposées dans un retrait 21 à une seconde altitude. Les plans longitudinaux médians du support 2, des réceptacles 19 et 20 et du retrait 21 sont coplanaires.

Le réceptacle 19 accueillant la roue avant 5 est hémisphérique tandis que le réceptacle 20 accueillant la roue arrière 7 est oblong. Le retrait 21 est d'une largeur suffisante par rapport à la largeur de la potence 3 repliée sur la planche 6. L'empreinte 18 comporte donc pour la position de rangement debout les deux réceptacles 19 et 20 pour les roues 5 et 7, et le retrait 21 pour la planche 6 et la potence 3.

La face supérieure 9 comporte également une rampe 22 de roulement où roule une des roues, voire les deux successivement. La rampe 22 de roulement est à une altitude suffisante pour que la trottinette 1 passe au-dessus des bosses de la face supérieure 9 quand la roue roule sur la rampe 22, sans que la planche 6 ne soit bloquée par le retrait 21 par exemple. La rampe 22 de roulement permet d'amener une roue vers son réceptacle. La majorité de la rampe 22 de roulement a une altitude supérieure à celle des réceptacles 19 et 20 et la planche 6 et la potence 3 passent au-dessus du retrait 21 quand la roue roule sur la rampe 22.

Sur la figure 2a, la rampe 22 de roulement présente un coude 23 au niveau du réceptacle 19 de la roue avant 5, permettant un changement de direction d'une roue dans le réceptacle 19. La rampe 22 de roulement est en deux parties qui se coupent à angle droit : la partie longitudinale 24 et la partie transversale 25. La partie longitudinale 23 se situe dans le plan longitudinal médian du support 2 et est coplanaire avec le plan longitudinal médian commun aux deux réceptacles 19 et 20 de roue.

La partie transversale 25 de la rampe 22 de roulement part à angle droit du réceptacle 19 de la roue avant 5 vers un des bords longs de la base 11 rectangulaire du support 2.

Le support 2 présente un point d'entrée 26 dans la rampe 22 de roulement le long d'un bord de la base 11 rectangulaire. Le point d'entrée 26 est quasiment à la même hauteur que le sol quand l'épaisseur du bord est nulle voir faible. Ainsi quand le support 2 est posé sur le sol, la roue de la trottinette 1 peut rouler depuis le sol vers la partie transversale 25 avec pour seul obstacle celui de l'épaisseur du bord du support 2 au niveau du point d'entrée 26. Il n'y a pas de marche à franchir. Le point d'entrée 26 sert également à faciliter la sortie de la roue de la rampe 22 de roulement vers le sol ou plancher. Le tronçon de la partie transversale 25 de la rampe 22 de roulement illustrée sur la figure 1 le plus proche du bord 27 longitudinal de la base 11 rectangulaire reste dans le plan de la base 11 rectangulaire, dans le plan du point d'entrée 26 dans la partie transversale 25.

La partie transversale 25 présente un autre tronçon avec une inclinaison 28 qui permet de passer du niveau du point d'entrée 26 au niveau supérieur de la rampe 22 de roulement.

Puis la roue roule sur la partie transversale 25 jusqu'au croisement des deux parties 24 et 25 de la rampe 22 de roulement, jusqu'au coude 23 qui sert de lieu de changement de direction de la roue. La rampe 22 de roulement présente au niveau du coude 23 une forme de demi-hémisphère pour permettre à la roue de pivoter autour d'un axe de pivotement orthogonal par rapport au sol passant par l'axe de rotation de roue sans heurter la face supérieure 9. Lorsque la roue pivote, le reste de la trottinette 1 peut pivoter également autour de l'axe de pivotement jusqu'à ce que la roue soit coplanaire avec le plan longitudinal médian de la partie longitudinale 23. La roue poursuit son chemin dans la partie longitudinale 23 jusqu'à ce qu'elle se cale dans le réceptacle 20 oblong et que la seconde roue se positionne dans le réceptacle 18 hémisphérique.

Le support 2 présente de fortes déclivités d'une part entre la partie longitudinale 23 de la rampe 22 et le retrait 21 et d'autre part entre le retrait 21 et les bords larges adjacents de la base 11 rectangulaire. Il en est de même entre le réceptacle 20 oblong et les bords longs adjacents de la base 11 rectangulaire ainsi qu'entre le réceptacle 20 oblong et le bord large adjacente de la base 11 rectangulaire, et entre le réceptacle 20 oblong et la partie longitudinale 23 de la rampe 22. Ainsi lorsque l'une des roues se trouve dans le réceptacle 20 oblong et l'autre dans le réceptacle 19 hémisphérique, la trottinette 1 occupe son empreinte 18 dans la face supérieure 9, elle est calée transversalement et longitudinalement par ces déclivités.

Sur la figure 2b, la face inférieure 10 du support 2 présente les moyens 29 d'attaches rapides du support 2 au point d'ancrage 30 non représenté sur cette figure 2b, du sol ou plancher 31, utilisant un matériau auto grippant. Les moyens 29 d'attaches rapides comprennent un matériau auto-agrippant avec un premier type d'éléments : des crochets, sur des patins 32. Le plancher 30 pourra être recouvert au moins partiellement d'un matériau avec des éléments de second type : des bouclettes. Le sol ou plancher 30 peut être en matériau à base de fibres qui forment les bouclettes auxquelles s'accrochent les crochets du matériau auto-agrippant des patins 32. Le point d'ancrage 30 du support 2 au sol ou plancher 31 est délimité par la zone de contact des patins 32 et du sol ou plancher 31 où la coopération des crochets et bouclettes est réalisée. Le point d'ancrage 30 est constitué par le matériau de la surface du sol ou du plancher 31. Les patins 32 sont placés à proximité des quatre angles de la base 11 rectangulaire de la face inférieure 10 du support 2. Les patins 32 sont donc dissimulés sous la face supérieure 9 du support 2, dissimulés par le support 2 lorsque le support 2 est en contact avec le sol ou le plancher 30. Ces moyens 29 d'attaches rapides permettent une fixation amovible, repositionnable et rapide du support 2 au point d'ancrage 30 du sol ou plancher 31 non visible sur les figures 1 et 2.

Quand les moyens 29 d'attaches rapides du support 2 au point d'ancrage 30 comprennent des matériaux auto-grippants, il y a une certaine homogénéité des moyens à manipuler pour maintenir l'engin 1 rangé sur le support 2 et pour fixer le support 2 au point d'ancrage 30 au sol ou plancher 31.

La vue de la figure 2c dévoile partiellement un dispositif 17 de charge de la batterie pour une trottinette 1 à assistance électrique. Le dispositif 17 de charge comprend le chargeur 33 relié à l'interface de connexion électrique avec la trottinette 1 et à l'interface de couplageà un réseau électrique. Dans le cas illustré, le chargeur 33 est relié à la batterie de la trottinette 1 par un premier câble 34 et par un second câble 35 à l'interface de couplage avec le réseau électrique. Le chargeur 33 comprend un boîtier 36 avec deux extensions 37 dépassant des deux côtés opposés du boîtier 36, trouées pour permettre un assemblage vissé du chargeur 33 à la face inférieure 10 du support 2. La direction de la plus grande dimension du boîtier 36 rectangulaire est perpendiculaire par rapport à la partie longitudinale 23 de la rampe 22 de roulement. Le chargeur 33 est solidaire du support 2. L'ensemble est déplacé conjointement.

Le premier câble 34 passe sous une arche 38 présente dans un bord longitudinal de la base 11 rectangulaire donc sous la face inférieure 10 de façon à ne pas être écrasé quand le support 2 reposera sur le plancher 31.

Le second câble 35 traverse le support 2 de la face inférieure 10 vers la face supérieure 9 par un orifice 39, ainsi est directement orienté pour être branché à la prise du réseau électrique

Ainsi le dispositif 17 de charge est moins exposé aux dégradations liées aux salissures ou humidité, aux manipulations de mise en place de la trottinette 1, à l'écrasement par la trottinette 1, ou le support 2 porteur de la trottinette 1.

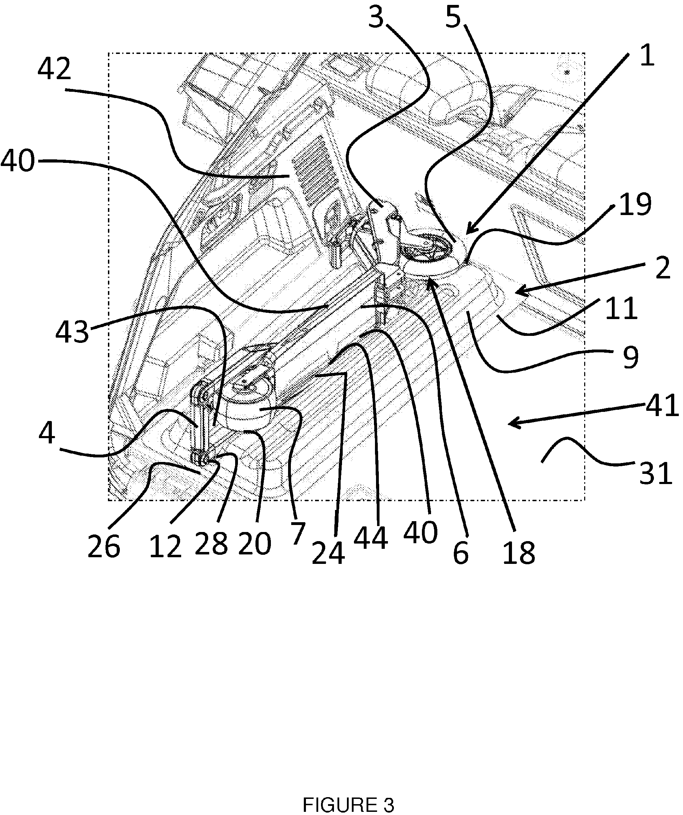

La figure 3 présente la trottinette 1 couchée sur un de ses flancs 40 dans le support 2 fixé au plancher 31 du coffre 41 du véhicule, parallèlement à la paroi 42 verticale longitudinale du véhicule.

Le support 2 est positionné dans un plan longitudinal du véhicule il n'y a pratiquement pas de plancher 31 visible entre les bords du coffre 41 et du support 2 les plus proches de l'arrière du véhicule. Le support 2 occupe quasiment toute la profondeur du coffre 41 mais occupe une zone étroite par rapport à la largeur du coffre 41 du véhicule. Le réceptacle 19 de la roue avant 5 est positionnée à l'avant du coffre 41 tandis que le réceptacle 20 de la roue arrière 7 est positionné à l'arrière du coffre 41. Le support 2 est fixé au plancher 31 de coffre 41 du véhicule par des patins 32 auto-agrippants non visibles.

La roue avant 5 de la trottinette 1 est donc introduite directement par le point d'entrée 26 de la rampe 22, situé à l'extrémité de la partie longitudinale 23 de la rampe 22 la plus proche du réceptacle 20 oblong. L'altitude du point d'entrée 26 par rapport au plan de la base 11 peut être nul et l'épaisseur de la base 11 au niveau du point d'entrée 26 peut être très faible. Ainsi, le poids de la trottinette 1 est supporté majoritairement par le support 2 et non par l'usager.

Puis la rampe 22 de roulement peut présenter une inclinaison 28 faible voire nulle par rapport au plan du point d'entrée 26 toujours par souci de réduire les efforts à fournir pour porter le poids de la trottinette 1. La roue roule dans la rampe 22 jusqu'à ce que les deux roues 5 et 7 soient arrivées à proximité de leurs réceptacles respectifs 19 et 20.

La trottinette 1 compactée est encore debout par rapport au support 2, ses roues 5 et 7 sont dans un plan longitudinal vertical du véhicule. La trottinette 1 est alors dans une première position verticale de roulement. La trottinette 1 présente de part et d'autre du plan vertical médian de la planche 6, un flanc 40. Ensuite il est procédé à un changement d'obliquité au cours duquel la trottinette 1 passe de la position verticale de roulement à la position de rangement couchée.

La trottinette 1 est penchée pour que le pneumatique de la roue 5 par exemple « décolle » par rapport à la rampe 22 et qu'un de ses flancs 40 entre en contact avec un appui 43 : une bosse de la face supérieure 9 qui aide à la mettre à l'horizontale sans la porter totalement. La trottinette 1 penchée repose sur un de ses flancs 40 en contact avec l'appui 43 et non plus sur le pneumatique de la roue 5 en contact avec la rampe 22. L'autre flanc 40 n'est pas en contact avec l'appui 43 et n'est plus en contact avec la face supérieure 9.

Pour pencher la trottinette 1 en utilisant l'appui 43, il est nécessaire que ni la surface inférieure 12 de la trottinette 1 ni le flanc 40 libre, ne puissent heurter la face supérieure 9 du côté opposé à l'appui 43 pendant le changement d'obliquité. En conséquence, la face supérieure 9 présentera les creux nécessaires, qui sont en forme de quart de sphère pour la roue, correspondant à l'espace nécessaire au passage de la roue d'un plan vertical à un plan horizontal.

La trottinette 1 couchée sur son flanc 40 est ensuite translatée (si besoin) jusqu'à ce que les roues 5 et 7 soient rangées dans des réceptacles 19 et 20 de l'empreinte 18 et que la planche 6, la potence 3 et le guidon 4 coplanaires dans un plan vertical par rapport à la base 11, soient rangés par exemple dans la partie longitudinale 23 de la rampe 22 pour ne pas occuper un volume trop important dans le coffre 41.

Au cours du rangement, la trottinette 1 se trouve dans une première position de roulement debout dans la rampe 22 de roulement puis dans une position intermédiaire, oblique par rapport à la base 11 et enfin une position de rangement couchée sur son flanc 40 dans l'empreinte 18. Dans sa position de rangement couchée sur son flanc 40, la surface inférieure 12 de la trottinette 1 est le flanc 40 de la trottinette 1 contenant la tranche 44 de la planche 6 et non le dessous de la planche 6. Le réceptacle 20 de la roue arrière 7 et le réceptacle 19 de la roue avant 5 sont cylindriques.

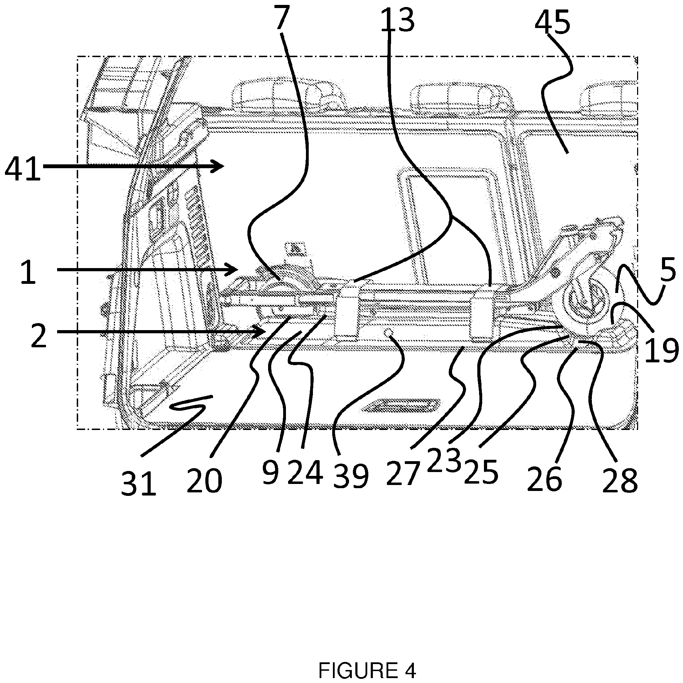

La figure 4 présente le support 2 fixé sur le plancher 31 par des patins 32 auto-agrippants non visibles, le long de la paroi 45 du coffre 41 qui est verticale et transversale vers l'avant du véhicule. Le support 2 se trouve donc au fond du coffre 41. L'utilisateur est de fait éloigné du support 2 lorsqu'il veut manipuler la trottinette 1 et le support 2. D'où l'avantage procuré par le point d'entrée 26 sur la partie transversale 25 de la rampe 22 de roulement qui face à l'usager.

La rampe 22 de roulement est directement accessible pour la roue de la trottinette 1 depuis la partie transversale 25 avec une inclinaison 28 très faible jusqu'au coude 23 de changement de direction où elle pivote à 90° pour positionner la roue arrière 7 dans le réceptacle 20 oblong adapté. Le poids de la trottinette 1 est donc porté par le plancher 31 du coffre 41 depuis l'arrière du coffre 41 à proximité de l'usager jusqu'à l'avant du coffre 41, puis est porté par la partie transversale 25 de la rampe 22 ce qui allège les efforts de manipulation de la trottinette 1 au fond du coffre 41.

Si l'usager introduit la roue arrière 7 de la trottinette 1 dans le point d'entrée 26, il peut faire rouler la roue 7 jusqu'au coude 23 où l'usager effectue un changement de direction de la roue 7, pour engager la roue 7 dans la partie longitudinale 23 de la rampe 22 jusqu'au réceptacle 20 oblong de la roue arrière 7. Ainsi l'usager n'a pas à porter le poids de la trottinette 1 pendant le rangement dans le support 2 présent au fond du coffre 41.

La trottinette 1 est maintenue liée au support 1 avec les sangles 14 des moyens de maintien 13.

Le support 1 n'est pas équipé de dispositif 17 de charge sur cette figure mais il présente l'orifice 39 prévu pour la traversée du support 1 par le câble 35 pour couplage au réseau électrique à proximité du bord long 27 présentant le point d'entrée 26 à la rampe 22. Ceci permet de facilement attraper ce câble 35 dans cette implantation de support 1 dans le coffre 41. L'arche non visible se retrouve quant à elle du côté de la paroi 45 verticale transversale, le câble 35 pour l'interface de couplage à la prise électrique, longe les parois plutôt que de s'étendre au milieu du coffre 41.

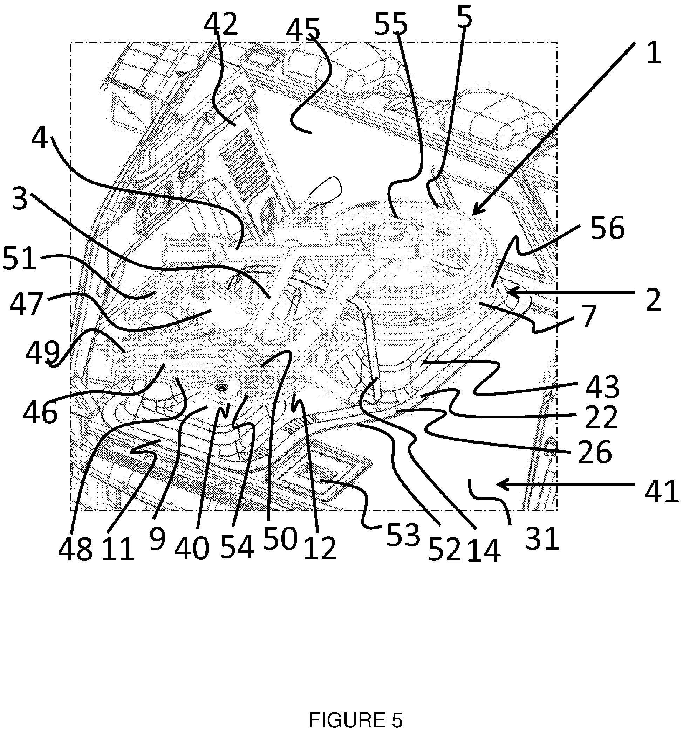

La figure 5 présente un mode de réalisation où l'engin roulant 1 est un vélo. avec une vue d'un vélo 1 compacté, et rangé couché sur un de ses flancs 40 au-dessus d'un support 2 posé sur le plancher 31 du coffre 41 et orienté longitudinalement par rapport au véhicule. Nous reprenons les mêmes références pour les éléments équivalents à ceux des figures précédentes. Le support 2 est fixé par des moyens 29 d'attaches rapides avec des patins 32 auto-agrippants au point d'ancrage 30 du plancher 31 de coffre 41 du véhicule, non visibles sur cette figure 5.

Le vélo 1 pliable est composé d'une partie avant 46 et une partie arrière 47 comportant chacune une roue et une part du cadre 48 tubulaire, liées par le dispositif 49 de pliage du cadre 48 présent au niveau du milieu du cadre 48. Le vélo 1 est compacté au niveau du dispositif 49 de pliage qui replie notamment la partie avant 46 parallèlement à la partie arrière 47, rendant les roues 5 et 7 coaxiales. Chaque flanc 40 de vélo 1 se trouve de part et d'autre d'un plan passant entre le plan de chaque roue. La potence 3 porteuse du guidon 4 est également compactée grâce à un dispositif de compactage 50 présent entre le guidon 4 et la roue avant 5, de sorte que la portion de potence 3 porteuse du guidon 4 vienne se ranger parallèlement à la portion de potence 3 porteuse de la roue avant 5. Le vélo 1 est compacté à son maximum quand les roues 5 et 7 sont coaxiales, la partie avant 46 compactée, les pédales non représentées sont repliées ou enlevées, la selle 51 abaissée dans le cadre 48.

Quand le vélo 1 est compacté, sa partie arrière 47 peut être couchée sur son flanc 40 opposé au flanc en vis-à-vis de la partie avant 46, parallèlement au-dessus du support 2. La surface inférieure 12 du vélo 1 rangé couché sur son flanc 40, est le flanc 40 du vélo 1, et non le dessous du vélo 1 quand ce dernier est debout. Idéalement le vélo 1 compacté ne dépasse pas trop de l'aplomb de la base 11 du support 2. La majorité de ses composants sont d'aplomb avec les bords de la base 11, la base 11 du support 2 s'inscrit dans un rectangle dont la longueur et la largeur sont approximativement égales à celles de la surface inférieure 12 du vélo 1 compacté, surface 12 inférieure orientée vers le sol. Le rectangle de la base 11 a une longueur et une largeur qui sont contenues dans respectivement dans la largeur et la longueur du coffre 41.

Les bords longs de la base 11 du support 2 sont orientés dans le sens longitudinal du véhicule ainsi la base 11 occupe la moitié du plancher 31 du coffre 41 avec un décroché 52 au niveau du dispositif de fermeture 53 du volet arrière fermant le coffre 41. Le reste du plancher 31 de coffre 41 est libre de recevoir d'autres affaires. Le support 2 protège la moitié de plancher 31 du coffre 41 recevant le vélo 1 des rayures par frottement du flanc 40 du vélo 1, des traces d'égouttement, des salissures si le vélo 1 a été mouillé ou sali.

Pour ranger le vélo 1, la roue arrière 7 est dans un premier temps, debout dans une première position verticale de roulement. La rampe 22 de roulement est présente le long d'un bord longitudinal du support 2 avec un point d'entrée 26 en vis-à-vis du dispositif de fermeture 53. La roue arrière 7 roule sur le dispositif de fermeture 53 et entre par le point d'entrée 26 sur la rampe 22 de roulement. La roue arrière 7 roule sur la rampe 22 de roulement vers le fond du coffre 41.

Une fois la roue arrière 7 arrivée en face de son réceptacle 20, il est procédé à un changement d'obliquité du vélo 1 au cours duquel le vélo 1 passe de la position verticale de roulement à la position de rangement couché. Le vélo 1 est penché vers le support 2 pour que le pneumatique de la roue 7 « décolle » par rapport à la rampe 22 et jusqu'à ce qu'un de ses flancs 40 entre en contact avec un appui 43 du support 2 : une bosse de la face supérieure 9 qui aide à le reposer sur son flanc 40, puis à l'horizontal sans le porter. Les autres éléments du vélo 1 compacté présents du côté opposé au flanc 40 de couchage du vélo 1 ne peuvent pas heurter la face supérieure 9 pendant le changement d'obliquité car la rampe 22 de roulement était présente sur le bord longitudinal du support 2 et qu'il n'y a aucun obstacle au-delà de ce bord de la face supérieure 9.

Le vélo 1 couché sur son flanc 40 est mis en position par translation au-dessus de la face supérieure 9 (si besoin) pour occuper l'empreinte 18 prévue avec un réceptacle 20 pour la roue arrière 7 et un renfoncement 54 pour le dispositif de compactage 50 de la potence 3. Le réceptacle 20 pour la roue arrière 7 reçoit en fait l'axe 55 de rotation de la roue 7 tandis que les rayons et le pneumatique 56 de la roue 7 affleurent la face supérieure 9 pour limiter les contacts salissants avec le support 2. Le vélo 1 couché sur le support 2 est en appui dans l'empreinte 18 au niveau de l'axe 55 de sa roue arrière 7 et de son dispositif de compactage 50 de potence 3. Il est ensuite lié au support 2 par la sangle 14 qui passe entre la partie avant 46 et la partie arrière 47 du vélo 1.

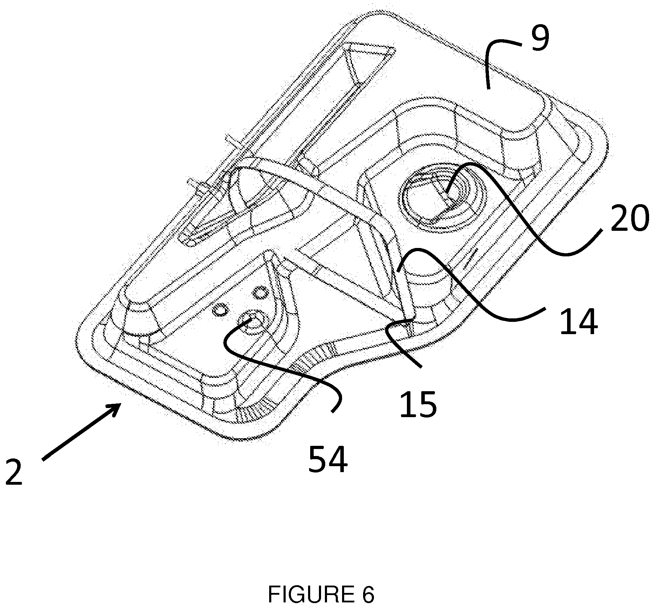

La figure 6 présente une vue du dessus du support 2 de vélo 1 donc sa face supérieure 9 avec une seule sangle 14 qui traverse deux fois le support 2, au niveau des deux ouvertures 15, de la face supérieure 9 vers la face inférieure 10 et vice-versa de façon à être liée au support 2. La sangle 14 avec ses extrémités jointes forme une boucle qui encercle partiellement le vélo 1 et le support 2. Les renfoncements 51 et réceptacle 20 pour l'axe 55 de la roue arrière 7 sont visibles.

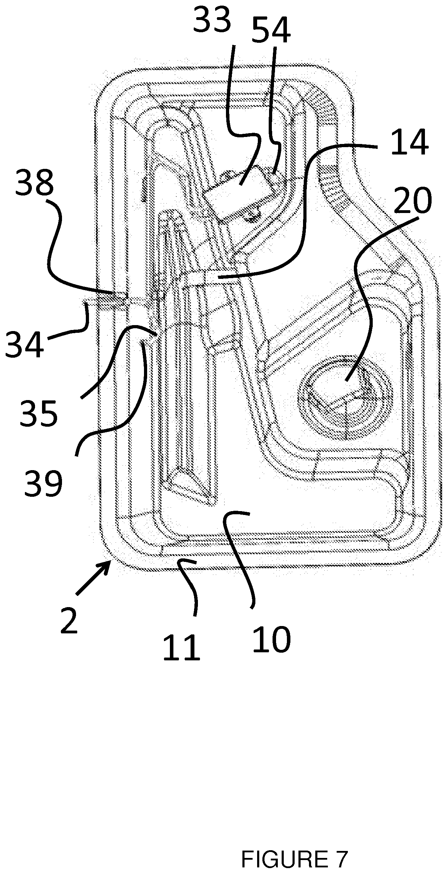

La figure 7 présente une vue du dessous du support 2 de vélo 1, soit une vue de la face inférieure 10, avec la sangle 14 et un dispositif 17 de recharge électrique. Le chargeur 33 est implanté en vis-à-vis du renfoncement 54 du dispositif de compactage 50 de potence 3. Les câbles 34 et 35 cheminent l'un à côté de l'autre dans les creux présents de la face inférieure 10 jusqu'au voisinage du bord de la base 11 la plus proche de la paroi 42 du coffre 41 équipée d'une prise au réseau électrique quand le support 2 est installé dans le coffre 41. Le câble 34 pour l'interface de connexion au vélo 1 passe sous une arche 38 de la base 11, et le second câble 35 pour l'interface de couplage au réseau électrique traverse le support 2 par un orifice 39 orienté vers la prise du réseau électrique du coffre 41 ou du lieu de stockage du support 2.

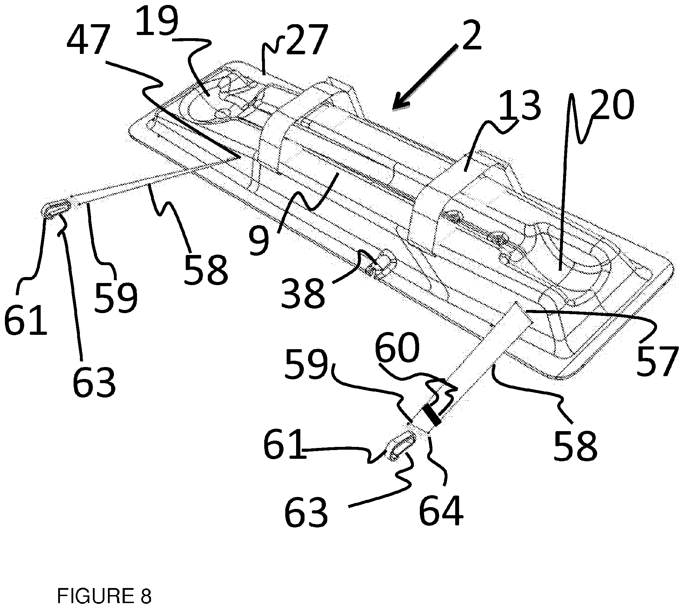

La figure 8 présente une variante aux moyens 29 d'attaches rapides positionnés sur la face inférieure 10 du support 2 tels que les crochets des patins 32 qui coopèrent avec des bouclettes au point d'ancrage 30 du sol ou plancher 31 en matière fibreuse présentés sur les figures 1 à 7. Effectivement lorsque le sol ou le plancher 31 ne présente pas un nombre de bouclettes suffisant, parce que le matériau de la surface du sol ou plancher 31 présente une densité de fibres insuffisantes pour former les bouclettes par exemple, les crochets des patins 32 du support 2 ne coopèrent pas tous avec des bouclettes et donc il y a une solidarisation insuffisante des patins 32 avec le point d'ancrage 30 du sol ou plancher 31, et donc du support 2 avec le sol ou le plancher 31. Les conséquences sont que le support 2 risque de ne pas être suffisamment stable en soi et surtout pour tenir l'engin 1 rangé et ce d'autant plus en situation dynamique.

Pour pallier à ces inconvénients, la variante des moyens 29 d'attaches rapides envisagée ci-après est d'utiliser le principe d'arrimage du support 2 avec le sol ou le plancher 31.

Dans un mode préférentiel de la variante représentée sur la figure 8, le support 2 est prévu pour être arrimé dans le sens de sa longueur, de sa plus grande dimension. Le support 2 est transpercé par deux fois, dans une déclivité proche de du bord longitudinal présentant l'arche 38, opposé au point d'entrée 26. Les perçages 57 sont alignés dans le sens de la longueur du support 2. Les deux perçages 57 sont le plus éloigné possible l'un de l'autre afin de procurer un meilleur arrimage

Une seule bande 58 d'une longueur suffisante traverse par deux fois le support 2 à travers les deux perçages 57. La médiane de la bande 58 entre ces deux perçages 57, est invisible sur cette figure 8 car la médiane longe la face inférieure 10 du support 2. Les deux bouts 59 extrêmes de la bande 58 dépassants des perçages 57 sont du côté de la face 9 supérieure du support 2. Chaque bout 59 est libre de tout mouvement quand le support 2 n'est pas arrimé. Chacun des bouts 59 est doté d'une attache recourbée 61 qui est à arrimer aux ergots 62 du sol ou du plancher 31. Les attaches recourbées 61 font que la bande 58 est retenue par rapport au support 2 indépendamment de l'arrimage. Les attaches recourbées 61 sont complétées avec un linguet 63 de sécurité qui garantit l'arrimage de l'attache recourbée 61 à l'ergot 62.

Sur la figure 8, au moins un des bouts 59 est complété un moyen 64 pour sangler la bande 58 tel qu'il en existe pour régler et conserver la bonne dimension d'une bandoulière de sac à main par exemple. De ce moyen 64 pour sangler, dépasse un brun 60 libre de la bande 58. Ce moyen 64 pour sangler la bande 58 permet à la bande 58 d'être tendue une fois que les attaches recourbées 61 coopèrent avec les ergots 62. Quand le brun 60 du bout 59 porteur le moyen 64 pour sangler est tiré au maximum pour obtenir une bande 58 tendue entre ces ergots 62 d'arrimage, le support 2 est vraiment arrimé au sol ou au plancher 31. Le support 2 est rendu immobile par rapport au sol ou plancher 31. L'engin 1 que le support 2 arrimé héberge, est assuré d'être stable.

La bande 58 est en matériaux résistant à la traction.

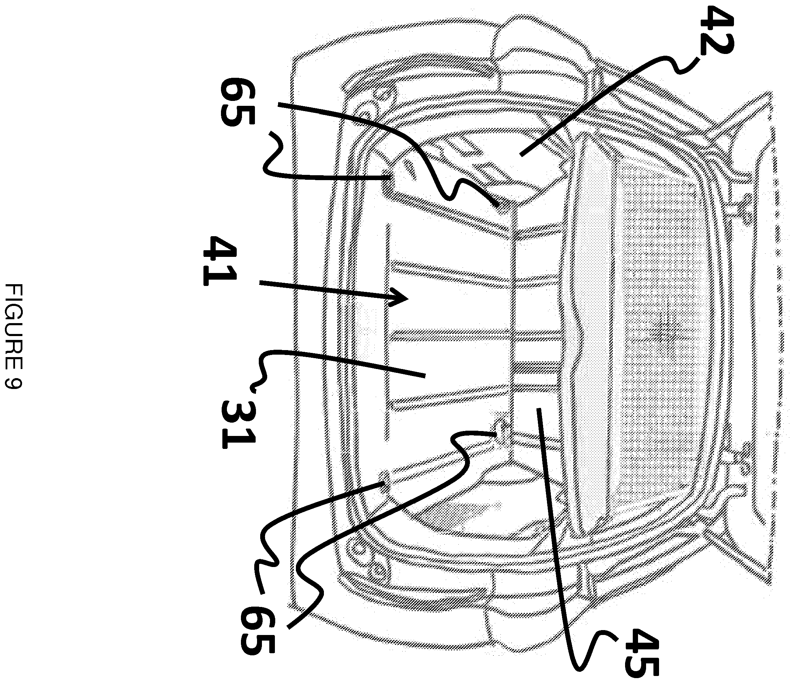

Dans la figure 9 présentant l'intérieur d'un coffre 41 de véhicule ouvert, les ergots 62 d'arrimage sont réalisés sous forme d'anneaux 65 d'arrimage présents sur le plancher 31 du coffre 41 aux quatre coins du coffre 41. Un premier anneau 65 est placé sur le côté transversal de l'ouverture du coffre 41. Un second anneau 65 est placé sur le côté longitudinal à gauche à l'ouverture du coffre 41. Un troisième anneau 65 est placé sur le côté transversal au fond du coffre 41 opposé à l'ouverture du coffre 41. Un quatrième anneau 65 est présent sur le côté transversal de l'ouverture de coffre 41, du côté opposé au premier anneau 65.

Chacune des deux attaches recourbées 61 de la bande 58 du support 2 présenté en figure 8, coopèrent avec un des deux anneaux 65 d'arrimages immédiatement voisins. A titre d'exemple, le bord longitudinal 26 du support 2 peut être positionné parallèlement à la paroi 42 gauche du coffre 41 et le support 2 est arrimé aux premier et second anneaux 65. Ou bien le côté longitudinal du support 2 est positionné le long de la paroi verticale transversale 45 du coffre 41 pour un arrimage du support 2 aux second et troisième anneaux 65, etc...

Le linguet 63 associé à chaque attache recourbée 61 pivote réciproquement entre deux positions extrêmes de fermeture et d'ouverture. Le linguet 63 est ouvert pour permettre le passage de l'anneau 65 dans l'attache recourbée 61. Lorsque l'attache recourbée 61 a été passée dans l'anneau 65 pour être arrimée alors le linguet 63 est positionné en mode fermé pour garantir l'arrimage.

En variante, il est possible que le support 2 illustré dans la figure 1, ne présente pas de rampe 22 de roulement entre le bord large du support 2 et le réceptacle 17 ou 18 positionné à l'arrière du coffre 41 car l'usager manipule la trottinette 1 et le support 2 juste en face de lui, la manipulation est aisée.

La trottinette 1 de la figure 1 pourrait être rangée dans le support 2 en position debout sans que la potence 3 soit repliée le long de la planche 6.

Dans une autre variante de l'invention, une poignée peut être agencée perpendiculairement entre les deux sangles 14 de la figure 1 pour soulever plus facilement le support 2 par exemple.

Dans une autre variante de l'invention, les moyens 13 de maintien de l'engin 1 par rapport au support 2 peuvent être une ou plusieurs sangles 14 équipées à la place des moyens auto-grippant, d'une boucle à décrochage rapide par pression latérale d'un élément mâle précédemment inséré dans l'élément femelle en vue de fermer la sangle sur elle-même. Pour rattraper les jeux entre l'engin 1 et le support 2 avec la sangle 14 bouclée ainsi, il est aussi possible de doubler la sangle 14 partiellement avec un élément élastique fixé sur la sangle 14 au niveau de la face inférieure 10 du support 2, qui se détendrait lors de la mise en place de l'engin 1 et qui se comprimerait une fois la boucle fermée afin d'assurer le maintien et réduire les bruits dus aux claquements de l'engin 1 contre le support 2.

Dans une autre variante de l'invention, le support 2 peut être également posé sur une surface plane telle que le plancher d'un appartement, d'un garage, ou d'une étagère d'un lieu de stockage non mobile.

Dans une autre variante de l'invention, le support 2 peut être également doté de pièces en caoutchouc ou assimilé sur la face inférieure 10 du support 2 pour réduire les bruits entre le support 2 et le sol ou plancher 31.

Dans une autre variante de l'invention, le câble 35 de couplage du chargeur 33 au réseau électrique peut ne pas traverser le support 2 et cheminer du côté de la face inférieure 10 jusqu'à une seconde arche d'un bord de la base 11 rectangulaire.

Dans une variante, l'attache recourbée 61 peut ne pas présenter de linguet 63 de sécurité.

Dans une variante, lorsque l'attache recourbée 61 présente un linguet 63, le linguet 63 et l'attache recourbée 61 peuvent être issus de matière. L'articulation du linguet 63 entre les différentes positions est réalisée par le fait de la souplesse de sa matière au niveau de l'axe de pivot entre les différentes positions. Ou bien le linguet 63 de sécurité passe d'une position ouverte à une position fermée et réciproquement du fait d'une articulation autour d'un élément pivot solidaire de l'attache recourbée 61.

En variante, les moyens 29 d'attaches rapides du support 2 au sol ou plancher 31 dans la figure 8 comprennent deux bandes 58 courtes traversant chacune une fois le support 2. Il est alors possible d'avoir deux bandes 58 courtes chacune traversant le support 2 au niveau d'un des perçages 57. Chaque bande 58 présente une attache recourbée 61 recourbée à l'extrémité de son bout 59 présent du côté de la face supérieure 9 et un moyen de retenu de la bande 58 avec le support 2 sur l'extrémité de la bande 58 présent du côté de la face inférieure 10. Le moyen de retenu rend chaque bande 58 solidaire par rapport au support 2. Le bout 59 de bande 58 avec l'attache recourbée 61 est libre de ses mouvements tant que l'attache recourbée 61 n'est pas arrimée. Lors de l'arrimage, l'attache recourbée 61 recourbée vient coopérer avec un ergot 62 ou anneau 65 présent sur le sol ou plancher 31. Pour arrimer le support, soit les bandes 58 sont à la longueur correspondant à la tension d'arrimage ou bien au moins les bandes 58 présentent un moyen 64 pour être sanglées une fois leur attache recourbée 61 coopérant aux ergots du sol ou du plancher 31.

En variante, les moyens 29 d'attaches rapides du support 2 au sol ou plancher 31 comprennent une seule bande 58 courte traversant une fois le support 2, d'une longueur correspondant à la tension une fois l'attache recourbée 61 coopérant à l'ergot 62 ou anneau 65 du sol ou du plancher 31. Le support 2 est retenu autour du point de l'ergot 62 ou anneau 65.

En variante, les moyens 29 d'attaches rapides ne demandent pas l'usage d'un outil en sus et pourraient être basés sur le principe de mousqueton ou goupille...

Dans une autre variante, le support 2 peut présenter des moyens 29 d'attaches rapides selon les deux variantes : auto agrippant ou arrimage qui se complètent pour répondre aux besoins de deux variétés de surface de sol ou plancher 31 selon la présence suffisance ou non de bouclettes, ou d'ergot 62 ou anneau 65.

L'invention propose ainsi un support 2 offrant de multiples avantages. Il est ainsi possible que l'engin roulant 1 rangé dans le support 2 devienne immobile par rapport au coffre 41 lorsque le véhicule est en mouvement ou plus stable sur un sol immobile. Cela réduit le déplacement des autres affaires dans le coffre 41, les bruits des déplacements..., réduit les risques de chutes de l'engin roulant 1 par rapport au sol suite à des bousculades et participe à la réduction des traces laissées par l'engin roulant 1 sur le sol ou le plancher 31. La face supérieure 9 du support 2 est facilement lavable. Ainsi l'usager dispose d'un support 2 pour entreposer son engin roulant 1 en limitant les traces de salissures, d'humidité ou de rayures du sol ou plancher 31.

## Revendications

1. Support (2) destiné à ranger un engin (1) roulant dans le coffre (41) d'un véhicule automobile, ledit support (2) présentant une face supérieure (9) ayant des dimensions adaptées pour recevoir l'engin roulant (1) en position de rangement, une roue de l'engin (1) étant alors disposée dans une empreinte (18) du support (2), **caractérisé en ce que** le support (2) comporte des moyens (29) d'attaches rapides au coffre (41) ne nécessitant pas l'utilisation d'un outil pour solidariser ou désolidariser ledit support (2) à un point d'ancrage (30), et lesdits moyens (29) d'attaches rapides sont constitués par un matériau autogrippant présents sur la face inférieure (10) du support (2) et aptes à s'ancrer au point d'ancrage étant constitué par le matériau de surface du plancher (41) du coffre (41).

2. Support (2) selon la revendication 1, **caractérisé en ce que** ledit support (2) est réalisé en matière plastique thermoformée.

3. Support (2) selon l'une quelconque des revendications 1 à 2 **caractérisé en ce que** ledit support (2) comporte des moyens de maintien (13) pour lier de façon amovible et rapide ledit engin (1) et ledit support (2).

4. Support (2) selon l'une quelconque des revendications 1 à 3 **caractérisé en ce que** ladite face supérieure (9) comporte au moins une rampe (22) de roulement avec un point d'entrée (26) pour l'engin (1) à une hauteur nulle ou faible par rapport audit sol ou plancher (31).

5. Support (2) selon la revendication 4 **caractérisé en ce que** ladite rampe (21) présente un coude (22).

6. Support (2) selon la revendication 4 ou la revendication 5 **caractérisé en ce que** ladite face supérieure (9) présente un appui (43) pour faire passer l'engin (1) réciproquement d'une position verticale de roulement à une position de rangement.

7. Support (2) selon l'une quelconque des revendications 1 à 5 **caractérisé en ce que** ledit engin (1) roulant est une trottinette, un monocycle, gyropode ou un vélo.

## Patentansprüche

1. Träger (2) zur Lagerung einer Maschine (1), die im Kofferraum (41) eines Kraftfahrzeugs rollt, wobei der Träger (2) eine Oberseite (9) mit Abmessungen aufweist, die zur Aufnahme der Walzmaschine (1) In der Lagerposition wird dann ein Rad der Maschine (1) in eine Aussparung (18) des Trägers (2) gebracht, die **dadurch gekennzeichnet ist, dass** der Träger (2) Mittel (29) für schnelle Kupplungen umfasst an dem Kofferraum (41), der nicht die Verwendung eines Werkzeugs zum Sichern oder Abnehmen des Trägers (2) von einem Verankerungspunkt (30) erfordert, und die Schnellkupplungsmittel (29) bestehen aus einem selbstgreifenden Material auf der Unterseite (10) des Trägers (2) vorhanden und an dem Ankerpunkt verankert werden können, der aus dem Oberflächenmaterial des Bodens (41) des Kastens (41) besteht.

2. Träger (2) nach Anspruch 1, **dadurch gekennzeichnet, dass** der Träger (2) aus thermogeformtem Kunststoff besteht.

3. Träger (2) nach einem der Ansprüche 1 bis 2, der **dadurch gekennzeichnet ist, dass** der Träger (2) Haltemittel (13) zum lösbaren und schnellen Verbinden der Vorrichtung (1) und des Trägers (2) umfasst).

4. Träger (2) nach einem der Ansprüche 1 bis 3, der **dadurch gekennzeichnet ist, dass** die Oberseite (9) mindestens eine Rollrampe (22) mit einem Eintrittspunkt (26) für die Maschine (26) umfasst 1) in einer Höhe von Null oder in Bezug auf den Boden oder Boden (31).

5. Unterstützung (2) nach Anspruch 4, **dadurch gekennzeichnet, dass** die Rampe (21) einen Winkel (22) aufweist.

6. Stütze (2) nach Anspruch 4 oder 5, **dadurch gekennzeichnet, dass** die Oberseite (9) eine Stütze (43) aufweist, um die Maschine (1) wechselseitig von einer vertikalen Rollposition zu einer Position zu führen Lager.

7. Stütze (2) nach einem der Ansprüche 1 bis 5, die **dadurch gekennzeichnet sind, dass** die Walzmaschine (1) ein Roller, ein Einrad, ein Gyropod oder ein Fahrrad ist.

## Claims

1. Support (2) intended to store a machine (1) rolling in the trunk (41) of a motor vehicle, said support (2) having an upper face (9) having dimensions adapted to receive the rolling machine (1) in the storage position, a wheel of the machine (1) then being placed in a recess (18) of the support (2), **characterized in that** the support (2) comprises means (29) for quick couplings to the trunk (41) not requiring the use of a tool for securing or detaching said support (2) from an anchoring point (30), and said quick coupler means (29) consist of a self-gripping material present on the underside (10) of the support (2) and able to be anchored to the anchor point consisting of the surface material of the floor (41) of the box (41).

2. Support (2) according to claim 1 **characterized in that** said support (2) is made of thermoformed plastic.

3. Support (2) according to any one of claims 1 to 2 **characterized in that** said support (2) comprises holding means (13) for releasably and quickly connecting said device (1) and said support (2).

4. Support (2) according to any one of claims 1 to 3 **characterized in that** said upper face (9) comprises at least one ramp (22) of rolling with an entry point (26) for the machine (1) at a zero or low height with respect to said ground or floor (31).

5. Support (2) according to claim 4 **characterized in that** said ramp (21) has an elbow (22).

6. Support (2) according to claim 4 or claim 5 **characterized in that** said upper face (9) has a support (43) for passing the machine (1) reciprocally from a vertical rolling position to a position storage.

7. Support (2) according to any one of claims 1 to 5 **characterized in that** said rolling machine (1) is a scooter, a unicycle, gyropod or a bicycle.
